# EUROPÄISCHE PATENTANMELDUNG

(11) **EP 3 840 405 A1**
(43) Veröffentlichungstag der Anmeldung: **23.06.2021**
(21) Anmeldenummer: 19216412.7
(22) Anmeldetag: 16.12.2019
(51) Int. Cl.: H04R 3/12, H04R 27/00, H04S 3/00, H04R 5/033

(54) **VERFAHREN UND SYSTEM ZUR ÜBERMITTLUNG UND WIEDERGABE AKUSTISCHER INFORMATIONEN**

(71) Anmelder: M.U. Movie United GmbH, 6020 Innsbruck (AT)
(72) Erfinder: Hammerstingl, Albert-Tobias, 6850 Dornbirn (AT); Sommer, Carmen, 6020 Innsbruck (AT); Wolf, Robert, 6020 Innsbruck (AT); Romanov, Michael, 8010 Graz (AT)
(74) Vertreter: Thun, Clemens

(57) **Zusammenfassung**

Bei einem Verfahren zur Übermittlung und Wiedergabe akustischer Informationen, werden akustische Daten, bereitgestellt, welche einen ersten Datenteil und einen zweiten Datenteil umfassen, wobei der erste Datenteil keine Sprachinformationen enthält und der zweite Datenteil Sprachinformationen enthält. Die Daten werden jeweils durch erste und zweite Audio-Wiedergabemittel (30, 40) wiedergegeben, derart, dass alle Benutzer (101, 102) die von den ersten Audio-Wiedergabemitteln (30) abgegebenen akustischen Signale gemeinsam hören können und die von den zweiten Audio-Wiedergabemitteln (40) abgegebenen akustischen Signale im Wesentlichen ausschließlich durch den zugehörigen Benutzer (101, 102) gehört werden können.

## Beschreibung

Die vorliegende Erfindung betrifft ein Verfahren sowie ein System zur Übermittlung und Wiedergabe akustischer Informationen. Insbesondere betrifft die Erfindung ein Verfahren und ein System, welches im Rahmen einer Multimedia-Anwendung, bspw. bei der Wiedergabe eines Kinofilms zum Einsatz kommt.

Die Wiedergabe von Filmen im Rahmen von Kinovorführungen findet üblicherweise in größeren Räumen oder ggf. auch im Freien derart statt, dass das Videobild auf einer für alle Zuschauer sichtbaren Leinwand, einer LED-Wall, per Virtual Reality o.ä. dargestellt wird und der Ton, also die zu dem Videobild gehörenden akustischen Informationen über ein zentrales, d.h. durch alle Zuschauer gemeinsam hörbares Lautsprechersystem wiedergegeben wird. Alle Zuschauer hören in diesem Fall also die identischen akustischen Informationen, was insbesondere bedeutet, dass im Falle von Dialogen oder allgemein von Sprachinformationen diese grundsätzlich in der identischen Sprache durch alle Beobachter wahrgenommen werden.

Es besteht allerdings zunehmend der Wunsch oder das Bedürfnis, im Rahmen einer Filmvorführung den Zuschauern die Möglichkeit zu eröffnen, den Film flexibel in einer gewünschten Sprache individuell zur Verfügung zu stellen. D.h., idealerweise sollten verschiedene Zuschauer in der Lage sein, gleichzeitig den Film zu sehen, ihn allerdings trotz allem jeweils in einer von Ihnen gewünschten Sprache zu verfolgen. Dies erfordert es, den Zuschauern jeweils individuell angepasste akustische Informationen zu übermitteln.

Eine naheliegende und bereits bekannte Lösung für dieses Problem besteht darin, dass jeder Zuschauer Kopfhörer trägt, wobei dann das akustische Signal entsprechend dem Wunsch des Zuschauers die darin enthaltenen Sprachinformationen in der von ihm gewünschten Sprache enthält und durch die Kopfhörer wiedergegeben wird. Da in der Regel in unterschiedlichen Sprachen synchronisierte Fassungen eines Films vorliegen, wird in diesem Fall dann dem Zuhörer - zumeist über Mobilfunkgeräte mit entsprechenden Apps (z.B. myLINGO, Native Waves, SoundFi...) - diejenige Fassung übermittelt, die seiner gewünschten Sprache entspricht, wobei er diese dann unmittelbar über seinen Kopfhörer wahrnehmen kann. Auf eine zentrale Wiedergabe der akustischen Informationen mit Hilfe eines zentralen Lautsprechersystems könnte dann verzichtet werden, da jeder Zuschauer ohnehin ausschließlich über den Kopfhörer die akustischen Informationen hört bzw. wahrnimmt. In Realität wird allerdings meistens der Film mit einer Sprache zentral wiedergegeben, wobei Zuschauer, die den Film in einer davon abweichenden Sprache verfolgen möchten, dann diese mit allen weiteren zugehörigen Toninformationen individuell über o.g. Apps o.ä. zusätzliche Devices übermittelt bekommen.

Es hat sich allerdings herausgestellt, dass die oben geschilderte Variante zu einem nicht befriedigenden Ergebnis führt. Problematisch ist in dieser Hinsicht zunächst, dass die bei einer üblichen Kinovorstellung vorliegende räumliche Wahrnehmung der akustischen Informationen mit Hilfe des Kopfhörers nur unzureichend erzielt werden kann. Insbesondere besteht allerdings das Problem, dass jeder Zuschauer vollkommen isoliert von anderen Zuschauern die akustischen Informationen wahrnimmt, was dem mit einem Kinobesuch üblicherweise angestrebten Ziel, nämlich gemeinschaftlich einen Film zu sehen, widerspricht. Bei der ebenfalls beschriebenen Variante, bei der der Film mit einer Sprache zentral wiedergegeben wird und davon abweichende Sprachen individuell per App o.ä. zur Verfügung gestellt werden, können ferner Echos oder das Problem einer sog. Doppelbeschallung auftreten, weil die - mit Ausnahme der unterschiedlichen Sprachen - identischen Audioinformationen eines Films durch Lautsprecher und Kopfhörer wiedergegeben werden, was sich wiederum störend auf das Hörerlebnis auswirkt.

Der vorliegenden Erfindung liegt deshalb die Aufgabenstellung zugrunde, eine Möglichkeit anzugeben, die Wiedergabe akustischer Informationen derart zu optimieren, dass die bei der oben beschriebenen Lösung bestehenden Nachteile vermieden werden.

Die Aufgabe wird durch ein Verfahren zur Übermittlung und Wiedergabe akustischer Informationen gemäß Anspruch 1 sowie durch ein System gemäß Anspruch 11 gelöst. Vorteilhafte Weiterbildungen der Erfindung sind Gegenstand der abhängigen Ansprüche.

Im Gegensatz zu der aus dem Stand der Technik bekannten, oben geschilderten Lösung, bei der die akustischen Informationen immer auf einem einzelnen bestimmten Weg an einen Zuschauer übermittelt werden, wird erfindungsgemäß vorgeschlagen, für die Übermittlung zwei getrennte Übertragungswege derart zu nutzen, dass die akustischen Informationen aufgeteilt auf beide Wege übermittelt werden, allerdings derart, dass sie letztendlich dann durch einen Benutzer, also einen Zuschauer oder einen Hörer, kombiniert also wie aus einer gemeinsamen Audioquelle wahrgenommen werden können. Insbesondere ist vorgesehen, die in digitaler Form vorliegenden akustischen Daten in einen ersten Datenteil und einen zweiten Datenteil zu trennen, wobei der zweite Datenteil Sprachinformationen enthält und der erste Teil keine Sprachinformationen enthält. Während der erste Datenteil, der keine Sprachinformationen enthält, dann mit Hilfe erster Audio-Wiedergabemittel wiedergegeben wird, die keinem Benutzer direkt zugewiesen sind, erfolgt die Wiedergabe des zweiten Datenteils mit Hilfe zusätzlicher zweiter Audio-Wiedergabemittel, welche allerdings in Bezug auf einen Benutzer derart angeordnet und ausgebildet sind, dass der Benutzer letztendlich die den beiden Datenteilen entsprechenden akustischen Informationen kombiniert wahrnehmen kann. Unter "kombiniert" wird hierbei verstanden, dass der Benutzer letztendlich alle akustischen Informationen derart wahrnimmt, als ob sie aus einer gemeinsamen Quelle stammen würden.

Erfindungsgemäß wird also ein Verfahren zur Übermittlung und Wiedergabe akustischer Informationen - vorzugsweise in einer Multimedia-Anwendung - vorgeschlagen, welches folgende Schritte aufweist:
a) Bereitstellen von in digitaler Form vorliegenden akustischen Daten, welche einen ersten Datenteil und einen zweiten Datenteil umfassen, wobei der erste Datenteil keine Sprachinformationen enthält und der zweite Datenteil Sprachinformationen enthält;
b) Übermitteln des ersten Datenteils an erste Audio-Wiedergabemittel und Ausgabe akustischer Signale, die dem ersten Datenteil entsprechen, durch die ersten Audio-Wiedergabemittel;
c) Übermitteln des zweiten Datenteils an zweite Audio-Wiedergabemittel und Ausgabe akustischer Signale, die dem zweiten Datenteil entsprechen, durch die zweiten Audio-Wiedergabemittel;
wobei die zweiten Audio-Wiedergabemittel in Bezug auf einen ihnen zugewiesenen Benutzer anders positioniert sind als die ersten Audio-Wiedergabemittel - die keinem Benutzer direkt zugewiesen sind - , insbesondere in unmittelbarer Nähe des Benutzers, und derart ausgebildet sind, dass
- der Benutzer die von den ersten Audio-Wiedergabemitteln abgegebenen akustischen Signale hören kann und
- die von den zweiten Audio-Wiedergabemitteln abgegebenen akustischen Signale im Wesentlichen ausschließlich durch diesen - den jeweiligen zweiten Audio-Wiedergabemitteln zugewiesenen - Benutzer gehört werden können.

Insbesondere kann vorgesehen sein, dass mehrere Benutzer vorhanden sind, denen jeweils individuell zweite Audio-Wiedergabemittel zugeordnet sind, wobei die von den ersten Audio-Wiedergabemitteln, die keinem der Benutzer direkt zugewiesen sind, abgegebenen akustischen Signale dann durch alle Benutzer gemeinsam gehört werden können und die von den zweiten Audio-Wiedergabemitteln, die jeweils den Benutzern direkt zugewiesen sind, abgegebenen akustischen Signale im Wesentlichen jeweils individuell ausschließlich durch den zugehörigen Benutzer gehört werden können.

Insbesondere im Falle mehrerer Benutzer kommen die Vorteile des erfindungsgemäßen Verfahrens deutlich zum Tragen. Während nämlich bei den im Stand der Technik bekannten Lösungen entweder alle Benutzer gemeinsam ein zentral wiedergegebenes akustisches Signal wahrnehmen oder jeder Benutzer vollkommen getrennt von anderen Benutzern akustische Signale wahrnimmt, liegt bei der erfindungsgemäßen Lösung eine Kombination aus akustischen Signalen vor, die zu einem Teil durch alle Benutzer gemeinsam wahrnehmbar sind und zum anderen Teil jedem Benutzer individuell übermittelt werden. Die Isolation bzw. vollständige Trennung zwischen den verschiedenen Benutzern bei der Wahrnehmung akustischer Informationen ist somit aufgehoben und es liegt wiederum ein gemeinschaftliches Hörerlebnis vor, wobei trotz allem gewisse Bestandteile der akustischen Informationen individuell an die Benutzer angepasst werden können. Ferner können die im derzeitigen oben beschriebenen Stand der Technik auftretenden Probleme wie Echos oder eine Doppelbeschallung vermieden werden.

Insbesondere besteht dann gemäß einer vorteilhaften Weiterbildung der Erfindung die Möglichkeit, den zweiten Teil der akustischen Daten, der den zweiten Audio-Wiedergabemitteln übermittelt wird, abhängig von einer Wahl des Benutzers zu wählen, insbesondere derart, dass die in dem zweiten Datenteil enthaltenen Sprachinformationen in einer durch den Benutzer gewählten Sprache vorliegen. Diese besonders bevorzugte Weiterbildung der Erfindung gestattet es also nunmehr, tatsächlich bspw. einen Kinofilm derart wiederzugeben, dass verschiedene Benutzer ihn gleichzeitig sehen und hören können, allerdings jeweils in der von ihnen gewünschten Sprache. Weiterhin eröffnet die Erfindung die Möglichkeit, jederzeit - also auch während des laufenden Films - zwischen den verschiedenen Sprachen zu wechseln.

Weiterbildungen des erfindungsgemäßen Konzepts betreffen Maßnahmen, durch welche insbesondere die Wiedergabe der den zweiten Datenteil betreffenden akustischen Informationen, also der Sprachinformationen zusätzlich optimiert wird. Hierbei ist bspw. zu berücksichtigen, dass die Wahrnehmung der dem ersten Datenteil entsprechenden akustischen Informationen, die durch die zentralen ersten Audio-Wiedergabemittel wiedergegeben werden, naturgegeben durch die Umgebung beeinflusst wird. Hierbei spielen insbesondere die akustischen Eigenschaften bspw. eines Raums, in dem der Film wiedergegeben wird, eine Rolle, da abhängig von der Größe und Form des Raums sowie der Positionierung der ersten Audio-Wiedergabemittel darin die entsprechenden akustischen Informationen letztendlich durch die Zuschauer in besonderer Weise wahrgenommen werden. Hierbei spielt insbesondere eine Rolle, wie sich der entsprechende Schall innerhalb des Raums ausbreiten kann und inwiefern dies beispielsweise zu Halleffekten oder Dämpfungseffekten führt.

Da letztendlich idealerweise die den beiden Datenteilen entsprechenden akustischen Informationen in möglichst übereinstimmender Weise vom Benutzer / Zuschauer / Hörer wahrgenommen werden sollen, ist gemäß einer vorteilhaften Weiterbildung vorgesehen, den zweiten Datenteil derart zu modifizieren, dass der Raum bzw. der Ort, an dem die Wiedergabe der akustischen Informationen erfolgt, berücksichtigt wird. Dies kann insbesondere durch den Einsatz eines sog. bi-nauralen Filters erfolgen, wobei Parameter des Filters vorzugsweise anhand zuvor durchgeführter Testmessungen ermittelt werden. D.h., vor Inbetriebnahme des Systems muss bspw. einmalig im Rahmen von akustischen Messungen die Art und Weise, wie sich Schall innerhalb des Raums der Wiedergabe ausbreitet, bestimmt werden, wobei dann die hierbei erhaltenen Informationen in den bi-nauralen Filter einfließen, sodass die Sprachinformationen bzw. die akustischen Informationen des zweiten Datenteils zwar unmittelbar in der Nähe des Benutzers wiedergegeben werden, allerdings in einer Art und Weise, dass der Eindruck entsteht, die Wiedergabe würde in einem Raum erfolgen, der dem Raum entspricht, in dem sich der Benutzer aufhält. Da dieses entsprechende Modifizieren des zweiten Datenteils unabhängig von der gewählten Sprache für alle Benutzer in gleicher Weise erfolgen sollte, ist vorzugsweise vorgesehen, dass der zweite Datenteil zentral und damit für alle Benutzer in gleicher Weise modifiziert wird, auch wenn grundsätzlich denkbar wäre, das entsprechende Modifizieren bzw. Einsetzen des bi-nauralen Filters unmittelbar in den zweiten Audio-Wiedergabemitteln zu implementieren.

Eine andere Weiterbildung des erfindungsgemäßen Konzepts berücksichtigt, dass nicht nur der Raum bzw. Ort der Wiedergabe an sich die Wahrnehmung der akustischen Informationen für den Benutzer beeinflusst, sondern auch die Position des Benutzers im Hinblick auf die ersten Audio-Wiedergabemittel. Da die den beiden Datenteilen entsprechenden akustischen Informationen auf verschiedenen Wegen übermittelt werden, ergeben sich Laufzeitunterschiede, wobei insbesondere der Zeitpunkt, zu dem die dem ersten Datenteil entsprechenden akustischen Informationen durch einen Benutzer wahrgenommen werden, von der Position des Benutzers in Bezug auf die ersten akustischen Wiedergabemittel abhängt. Dies deshalb, da hier die Übermittlung der akustischen Informationen im Wesentlichen über Schall erfolgt, was somit in Bezug auf die Entfernung zu den jeweiligen ersten Audio-Wiedergabemitteln zu einer positionsabhängigen Laufzeitverzögerung führt, während hingegen der zweite Datenteil nahezu über die gesamte Strecke in elektronischer Form, z.B. über Kabel oder Funk übermittelt wird, sodass hier zwar durch die entsprechende Verarbeitung der Daten ebenfalls eine Verzögerung vorliegen wird, welche allerdings im Wesentlichen positionsunabhängig für alle Benutzer gleich sein wird. Um diesen Effekt berücksichtigen zu können, ist deshalb vorgesehen, den zweiten Datenteil vor Ausgabe der entsprechenden akustischen Signale zusätzlich durch die zweiten Audio-Wiedergabemittel zu modifizieren, um die Position der zweiten Audio-Wiedergabemittel in Relation zu den ersten Audio-Wiedergabemitteln berücksichtigen zu können. Es handelt sich hierbei im Wesentlichen um das Berücksichtigen einer zeitlichen Verzögerung der Wiedergabe der dem zweiten Datenteil entsprechenden akustischen Informationen, wobei dieses Modifizieren dann individuell für jeden Benutzer derart durchgeführt wird, dass eine möglichst synchrone Wahrnehmung der den beiden Datenteilen entsprechenden akustischen Informationen erzielt wird. Damit ist sichergestellt, dass letztendlich die akustischen Informationen aus beiden Wiedergabemitteln vom Benutzer insgesamt einheitlich und homogen wahrgenommen werden können.

Diese erfindungsgemäßen Maßnahmen sorgen beispielsweise in dem oben beschriebenen Beispiel einer Filmvorführung dafür, dass Bild und Ton ideal aufeinander abgestimmt durch den Zuschauer wahrgenommen werden können. Dies gilt dabei für den zentral ausgegebenen Ton ohne Sprachinformationen, insbesondere jedoch auch für den erfindungsgemäß individuell ausgegebenen Tonanteil, der die Sprachinformationen beinhaltet.

Die Übermittlung sowohl des ersten als auch des zweiten Datenteils kann jeweils sowohl drahtgebunden als auch drahtlos erfolgen.

Ein bevorzugtes Anwendungsbeispiel für das erfindungsgemäße Konzept stellt wie bereits erwähnt die Wiedergabe eines Kinofilms dar, weshalb gemäß einem besonders bevorzugten Ausführungsbeispiel vorgesehen ist, dass zeitgleich mit der Übermittlung und Wiedergabe der akustischen Informationen optische Informationen insbesondere Videoinformationen wiedergegeben werden. Grundsätzlich wäre allerdings die Durchführung des Verfahrens auch unabhängig von der Wiedergabe von Videoinformationen denkbar.

Gemäß der vorliegenden Erfindung wird weiterhin ein System zur Übermittlung und Wiedergabe akustischer Informationen - vorzugsweise in einer Multimedia-Anwendung - vorgeschlagen, welches aufweist:
a) eine Speichereinrichtung zum Bereitstellen von in digitaler Form vorliegenden akustischen Daten, welche einen ersten Datenteil und einen zweiten Datenteil umfassen, wobei der erste Datenteil keine Sprachinformationen enthält und der zweite Datenteil Sprachinformationen enthält;
b) Mittel zur Übermittlung des ersten Datenteils an erste Audio-Wiedergabemittel;
c) erste Audio-Wiedergabemittel zur Ausgabe akustischer Signale, die dem ersten Datenteil entsprechen;
d) Mittel zur Übermittlung des zweiten Datenteils an zweite Audio-Wiedergabemittel;
e) zweite Audio-Wiedergabemittel zur Ausgabe akustischer Signale, die dem zweiten Datenteil entsprechen;
wobei die zweiten Audio-Wiedergabemittel in Bezug auf einen ihnen zugewiesenen Benutzer anders positioniert sind als die ersten Audio-Wiedergabemittel - die keinem Benutzer direkt zugewiesen sind -, insbesondere in unmittelbarer Nähe des Benutzers, und derart ausgebildet sind, dass
- der Benutzer die von den ersten Audio-Wiedergabemitteln abgegebenen akustischen Signale hören kann und
- die von den zweiten Audio-Wiedergabemitteln abgegebenen akustischen Signale im Wesentlichen ausschließlich durch diesen dem jeweiligen zweiten Audio-Wiedergabemittel zugewiesenen Benutzer gehört werden können.

Bei den zweiten Audio-Wiedergabemitteln kann es sich beispielsweise um einen Kopfhörer handeln. Vorzugsweise können sich die zweiten Audio-Wiedergabemittel in einem Abstand von bis zu einem Meter vom Ohr des Benutzers entfernt befinden. Es kann sich also z.B. um Kopfhörer am Ohr oder aber auch um in eine Kopfstütze o.ä. verbaute Wiedergabemittel handeln, während hingegen die ersten Audio-Wiedergabemittel vorzugsweise eine Anordnung bestehend aus einem oder mehreren Lautsprechern sind.

Nachfolgend soll die Erfindung anhand der beiliegenden Zeichnung näher erläutert werden. Es zeigen:
- Figur 1: eine schematische Darstellung des Verfahrens der Übermittlung und Wiedergabe von Audioinformationen gemäß der vorliegenden Erfindung;
- Figur 2: den grundsätzlichen Aufbau eines erfindungsgemäßen Systems zur Durchführung des Verfahrens zur Übermittlung und Wiedergabe von Audioinformationen;
- Figur 3: ein erstes Beispiel eines Benutzerinterfaces zur Auswahl einer durch einen Hörer gewünschten Sprachinformation; und
- Figur 4: ein bevorzugtes zweites Ausführungsbeispiel einer Möglichkeit zum Auswählen einer durch einen Benutzer / Zuschauer / Hörer gewünschten Sprachinformation direkt am dem Benutzer / Zuschauer / Hörer zugewiesenen zweiten Audio-Wiedergabemittel.

Die erfindungsgemäße Vorgehensweise soll nachfolgend anhand des Beispiels einer Filmvorführung in einem geschlossenen Raum, also beispielsweise einem Kinosaal erläutert werden. Wie bereits erwähnt, ist das Konzept allerdings nicht auf geschlossene Räume oder Säle beschränkt, sondern kann auch bspw. bei der Wiedergabe von akustischen Informationen im Freien eingesetzt werden. Auch der Einsatz im Privatbereich beispielsweise in Form eines Heimkinos im Wohnzimmer wäre denkbar, da auch hier oftmals das Bedürfnis besteht, dass mehrere, gleichzeitig ein Video betrachtende Personen die Sprachinformationen in verschiedenen Sprachen hören möchten. Schließlich ist darauf hinzuweisen, dass die erfindungsgemäße Übermittlung und Wiedergabe von akustischen Informationen auch vollkommen ohne eine gleichzeitige Darstellung von Bildinformationen erfolgen könnte.

Ferner ist darauf hinzuweisen, dass im Folgenden die Begriffe "Benutzer" oder "Zuschauer" verwendet werden, diese allerdings geschlechtsneutral zu verstehen sind. Die vorliegende Erfindung bezieht sich auf Anwender jeglichen Geschlechts.

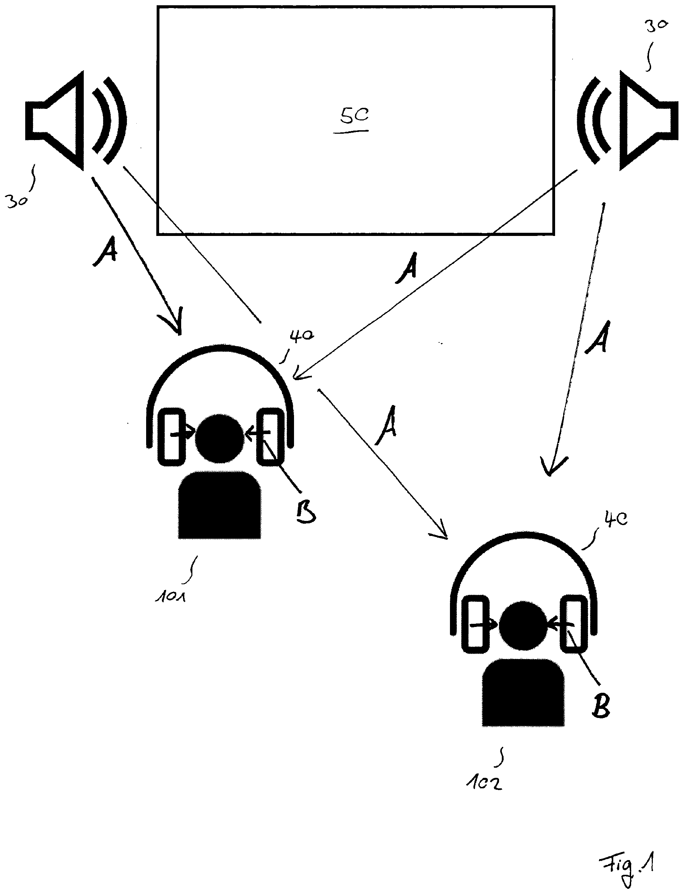

Figur 1 zeigt also nunmehr schematisch das erfindungsgemäße Verfahren zum Übermitteln und Wiedergeben akustischer Informationen für den Fall, dass mehrere Benutzer bzw. Zuschauer 101 und 102 gemeinsam einen in einem Kinosaal wiedergegebenen Film betrachten möchten, allerdings jeweils den Film in unterschiedlicher Sprache verfolgen möchten. Wie viele Benutzer an einer Wiedergabe teilnehmen und wie viele hiervon jeweils welche der beliebig vielen Sprachfassung wählen und für wie lang hören (falls beispielsweise während der Wiedergabe des Films ein Sprachwechsel durch einen Benutzer gewählt wird), ist für das System bzw. das Verfahren der vorliegenden Erfindung unerheblich. Jedoch ist das System in der Lage, zu erkennen, wie viele Benutzer welche Sprachfassung über welchen Zeitraum während einer Vorstellung wählten bzw. hörten, was ggf. im Hinblick auf die Abrechnung mit unterschiedlichen Rechteinhabern unterschiedlicher Synchronfassungen von Vorteil sein kann.

Hierbei ist zunächst vorgesehen, dass die Bildinformationen auf einer Leinwand oder einem Bildschirm 50 dargestellt werden, sodass sie also einheitlich von allen Zuschauern 101 und 102 wahrgenommen werden können. Zur Wiedergabe der zugehörigen akustischen Informationen ist ferner eine Anordnung von Lautsprechern 30 vorgesehen, die je nach Ausgestaltung des Soundsystems an verschiedenen Stellen des Kinosaals positioniert sein können und Schall derart in den Raum abgeben, dass er durch alle darin befindlichen Zuschauer wahrnehmbar ist. Im dargestellten Ausführungsbeispiel wird davon ausgegangen, dass die Lautsprecher 30 sich im Bereich der Leinwand 50 bzw. des Bildschirms befinden, wobei - wie bereits erwähnt - auch deutlich mehr Lautsprecher vorhanden sein können und diese über den Raum verteilt positioniert sein können. Wesentlich ist allerdings, dass diese Lautsprecher 30 derart für die Wiedergabe akustischer Informationen ausgebildet sind, dass diese durch sämtliche Zuschauer gleichzeitig wahrnehmbar sind.

Bei bisherigen Systemen war vorgesehen, dass sämtliche Audioinformationen über das von allen Zuschauer wahrnehmbare Lautsprecher-System 30 wiedergegeben wurden. Dies bedeutet allerdings, dass die Zuschauer 101 und 102 den Film lediglich in einer einzigen Sprache verfolgen können.

Erfindungsgemäß ist deshalb vorgesehen, die zu dem Videobild zugehörigen akustischen Informationen in einer modifizierten Weise wiederzugeben, sodass die Möglichkeit besteht, für die Zuschauer 101 und 102 eine individuelle, angepasste, insbesondere im Hinblick auf die Sprache angepasste Wiedergabe vorzunehmen.

Kerngedanke der Erfindung ist hierbei, die akustischen Informationen in zwei Anteile aufzuspalten. Für den beispielhaften Fall einer Kinovorführung bedeutet dies einerseits einen ersten Anteil, der keine synchronisierbaren bzw. synchronisierten Sprachinformationen enthält, und andererseits einen zweiten Anteil, der - idealerweise ausschließlich - synchronisierbare bzw. synchronisierte Sprachinformationen Sprachinformationen enthält. Eine entsprechende Aufteilung der akustischen Daten ist üblicherweise verhältnismäßig einfach durchzuführen, da die Toninformationen eines Films in der Regel digitalisiert in mehreren Dateien zur Verfügung gestellt werden, wobei die Sprachinformationen - vor dem sog. Mastering - in bestimmten, eindeutig identifizierbaren Dateien gespeichert sind. Der zweite Datenteil, der die Sprachinformationen enthalten soll, besteht dann also im Prinzip aus diesen entsprechenden Dateien.

Der erste Datenanteil hingegen, der keine synchronisierbaren bzw. synchronisierten Sprachinformationen enthält, kann allen Zuschauern 101 bzw. 102 unabhängig von der Sprachpräferenz in gleicher Weise zur Verfügung gestellt werden, weshalb bei der erfindungsgemäßen Vorgehensweise vorgesehen ist, die diesem ersten Datenteil entsprechenden akustischen Signale zentralisiert über das Lautsprechersystem 30 abzugeben, derart, dass - wie bei einer üblichen Kinovorführung - alle Zuschauer 101, 102 im Prinzip gemeinsam und gleichzeitig die entsprechenden akustischen Informationen hören können. Letztendlich geben also die Leinwand 50 und das Lautsprechersystem 30 den Film in einer für alle Zuschauer 101, 102 in gleicher Weise wahrnehmbaren Form wieder, die allerdings vorerst noch keine Dialoge bzw. keinerlei Sprachinformationen beinhaltet. Die Übermittlung dieses Anteils der akustischen Informationen ist in Figur 1 schematisch durch die Pfeile A dargestellt, wobei selbstverständlich die Zuschauer 101, 102 das akustische Signal aller Lautsprecher 30 des Systems hören werden.

Die synchronisierbaren bzw. synchronisierten Sprachinformationen des Films hingegen bilden wie bereits erwähnt den zweiten Datenteil der akustischen Informationen, der erfindungsgemäß den Zuschauern 101, 102 auf einem alternativen Weg zur Verfügung gestellt wird. Hierzu ist vorgesehen, dass jedem Zuschauer 101, 102 individuell weitere Audio-Wiedergabemittel 40 zugeordnet sind. Diese sind im vorliegenden Fall in Form von Kopfhörern 40 dargestellt, wobei zunächst wesentlich ist, dass diese weiteren Audio-Wiedergabemittel 40 im Vergleich zu dem Lautsprechersystem 30 in unmittelbarer Nähe des jeweils zugeordneten Zuschauers 101 bzw. 102 angeordnet sind. Es muss sich also bei diesen zweiten Audio-Wiedergabemittel 40 nicht zwingend um Kopfhörer handeln, sondern es könnten auch hierfür z.B. Lautsprecher vorgesehen sein, die einem Zuschauer 101 bzw. 102 individuell zugeordnet sind und sich hierfür in unmittelbarer Nähe (z.B. in einem Abstand von max. 1m) des Zuschauers 101 bzw. 102 befinden. Insbesondere ist vorgesehen, dass die von einem Kopfhörer 40 bzw. von den zweiten Audio-Wiedergabemitteln abgegebenen akustischen Signale ausschließlich durch den ihm bzw. ihnen zugeordneten Zuschauer 101 oder 102 wahrnehmbar sind, dass also nur dieser Zuschauer 101 bzw. 102 die entsprechenden akustischen Signale hören kann.

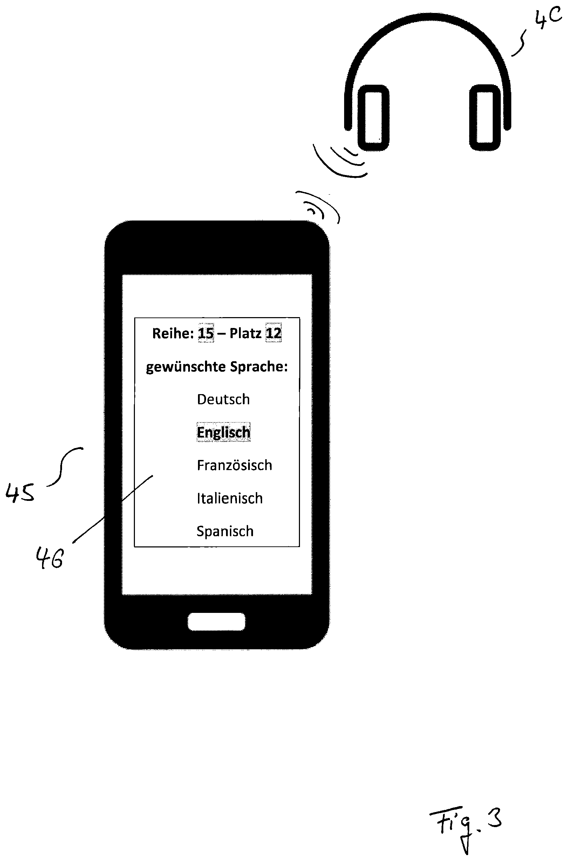

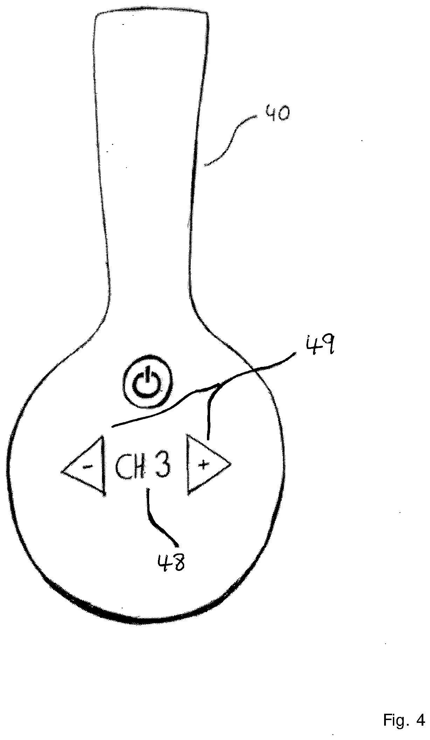

Die durch die individuell zugeordneten Kopfhörer 40 wiederzugebenden Sprachinformationen werden nunmehr an die Kopfhörer 40 derart übermittelt, dass dem jeweiligen Zuschauer 101 bzw. 102 die Sprachinformationen in der von ihm gewünschten Sprache zur Verfügung gestellt werden. Dargestellt ist dies schematisch in Figur 1 durch die Pfeile B. D.h., der in Figur 1 dargestellte Zuschauer 101 hört also mit Hilfe der Kopfhörer 40 die dem Film zugehörigen Sprachinformationen in einer ersten Sprache, beispielsweise in Deutsch, während hingegen dem zweiten Benutzer 102 die durch die Kopfhörer 40 wiedergegebenen Sprachinformationen in einer zweiten Sprache, beispielsweise in Englisch, zur Verfügung gestellt werden. Beide Zuschauer 101 und 102 können also nunmehr die Sprachinformationen entsprechend ihrer individuellen Wahl erhalten. Hierbei ist darauf hinzuweisen, dass die Benutzer üblicherweise zu Beginn bzw. vor der Vorführung die von ihnen gewünschte Fassung der Sprachinformationen auswählen werden, allerdings jederzeit die Möglichkeit bestehen kann, auch während der laufenden Vorführung auf eine andere Version zu wechseln. Jedes zweite Audio-Wiedergabemittel stellt dem diesem zugewiesenen Benutzer alle verfügbaren Sprachinformationen zur Verfügung, aus welchen dieser Benutzer dann jederzeit - z.B. direkt am zweiten Audio-Wiedergabemittel selbst (Figur 4) oder per am Platz verbautem oder losem Zusatz-Device (Figur 3) - die gewünschte Sprachfassung wählen bzw. ändern kann.

Wesentlich ist, dass die Kopfhörer 40 des erfindungsgemäßen Systems derart ausgebildet sind, dass der jeweils zugehörige Zuschauer 101, 102 nicht ausschließlich die von den Kopfhörern 40 wiedergegebenen akustischen Informationen hört, sondern gleichzeitig auch die zentral über das Lautsprechersystem 30 abgegebenen akustischen Informationen. Beide Zuschauer 101, 102 empfangen also auf zwei unterschiedlichen Wegen A, B akustische Signale, einerseits die über das Lautsprechersystem 30 ausgegebenen, keine Sprachinformationen enthaltenden Signale und andererseits die über die Kopfhörer 40 individuell zugespielten Sprachinformationen in der vom jeweiligen Zuschauer / Hörer / Benutzer gewünschten Sprache. Das Gehör der Zuschauer 101, 102 kombiniert dann wiederum jeweils die empfangenen bzw. gehörten Informationen, sodass in Kombination daraus eine - im Falle der Kinoverführung zusätzlich auch dem Videobild entsprechende - akustisch-homogene Gesamtinformation gehört wird, die allerdings jeweils an den entsprechenden - sprachlichen - Wunsch des Zuschauers angepasst ist.

Der entscheidende Vorteil gegenüber bislang bekannten Lösungen besteht dabei darin, dass zumindest ein Teil der akustischen Informationen, insbesondere also der keine Sprachinformationen enthaltende Teil zentral durch die Lautsprecher 30 wiedergegeben und damit durch sämtliche Zuschauer gemeinsam gehört wird. Dies resultiert in einem gemeinschaftlichen Wahrnehmungserlebnis, was im Vergleich zu einer Variante, bei der die verschiedenen Teilnehmer ausschließlich über ihnen zugeordnete Kopfhörer sämtliche akustischen Informationen enthalten, deutlich angenehmer ist. Letztendlich wird dem Zuschauer der Eindruck vermittelt, dass er gemeinsam mit allen anderen Zuschauern den Film in gleicher Weise wahrnimmt, wobei trotz allem die Wiedergabe der akustischen Informationen insbesondere im Hinblick auf die Sprache individuell angepasst ist.

Dabei bestehen die nachfolgend beschriebenen Möglichkeiten, die Wiedergabe insbesondere der dem zweiten Datenteil entsprechenden akustischen Informationen zusätzlich zu optimieren, wobei diese Maßnahmen dazu beitragen, dass das Kombinieren der auf den unterschiedlichen Wegen übertragenen akustischen Signale durch das Gehör eines Zuschauers verbessert wird.

Hierbei ist zunächst zu berücksichtigen, dass die durch das zentrale Lautsprechersystem 30 abgegebenen akustischen Signale, also die Schallwellen in der Regel naturgegeben durch die Raum-Charakteristik/Beschaffenheit beeinflusst bzw. modifiziert werden, bevor sie bei den Zuschauern 101 und 102 eintreffen und durch diese gehört werden. Eine Beeinflussung findet hierbei insbesondere durch den Raum bzw. den Ort der Wiedergabe statt, da der von den Lautsprechern ausgegebene Schall an Wänden oder anderen Oberflächen innerhalb des Raums reflektiert und in einer den Raum charakterisierenden Weise zusätzlich modifiziert -z.B. in bestimmten Frequenzbereichen teilweise gedämpft - wird, bevor er bei den Zuschauern 101, 102 eintrifft und durch diese gehört und wahrgenommen wird. Ein klassisches Beispiel hierfür ist, dass die Form und Größe eines Raums z.B. den Nachhall in einer bestimmten Weise beeinflusst. Dämmende Oberflächen-, Wand- oder Deckenbereiche können ferner bestimmte Frequenzen des akustischen Signals dämpfen bzw. besonders beeinflussen, wobei auch dies abhängig von dem Ort bzw. Raum der Wiedergabe jeweils unterschiedlich ist.

Weiterhin ist von Bedeutung, in welchem Abstand sich der Zuschauer bzw. Zuhörer von dem zentralen Lautsprechersystem befindet und aus welcher Richtung die Schallsignale bei dem Zuschauer bzw. Zuhörer eintreffen, da das menschliche Gehör in Zusammenarbeit mit dem Gehirn in der Lage ist, seine wahrgenommenen Hörereignisse bestimmten Richtungen zuzuweisen. Sobald nämlich eine Schallquelle nicht mehr mittig vor einem Hörer angeordnet ist, erreichen identische sog. Schwingungsphasen das linke und das rechte Ohr des Hörers nach unterschiedlichen Laufzeiten und in unterschiedlichen Pegeln (sog. interaurale Laufzeitdifferenzen, ITD und interaurale Pegeldifferenzen, ILD), und veranlassen das Gehör zu einer Raumlokalisation im virtuellen Schallfeld. Es handelt sich hier um winzige Differenzen, da Laufzeitdifferenzen bzw. Laufzeitunterschiede durch das menschliche Gehör bereits ab einer Größe von 10 µs zur Richtungslokalisation ausgewertet werden können. Eine wichtige Rolle kommt hierbei den Ohrmuscheln zu. Sie wirken als mechanisch-akustische Filter und sorgen dafür, dass der Schall abhängig von der eintreffenden Richtung ein jeweils typisches Frequenzgangprofil am Trommelfell aufweist, was als Außenohr-Übertragungsfunktion oder Head Related Transfer Function (HRTF) bezeichnet wird.

Eine aus dem Stand der Technik bekannte Vorgehensweise, um insbesondere den zuerst beschriebenen Effekt der Schallwahrnehmung zu charakterisieren, ist das Durchführen sog. bi-nauraler Messungen. In diesem Fall wird mit Hilfe akustischer Messungen untersucht, wie ein Schallsignal durch einen entsprechenden Raum oder Ort beeinflusst wird, wobei anhand der Messungen bestimmte Parameter bestimmt werden können, die qualitativ beschreiben, in welcher Weise der Raum bzw. Ort das Schallsignal modifiziert.

Weiterhin ist bekannt, bei der Wiedergabe akustischer Signale - insbesondere über Kopfhörer - diese Signale mit Hilfe sog. bi-nauraler Filter auf Basis der zuvor erklärten, per akustischer Raum-Vermessung gewonnenen Informationen zu modifizieren, bevor die Signale durch einen Kopfhörer abgegeben werden. Diese bi-nauralen Filter dienen im beispielhaften Fall einer Kinovorstellung dazu, das akustische Signal, bevor es durch einen Kopfhörer abgegeben wird, derart zu beeinflussen bzw. zu modifizieren, dass es den Eindruck erweckt, es wäre insgesamt in einem Raum und aus einer Richtung abgegeben worden, der bzw. die den Parametern des zugehörigen bi-nauralen Filters entspricht.

Diese Vorgehensweise erfolgt nunmehr auch bei der Übermittlung und Wiedergabe der über die Kopfhörer 40 ausgegebenen Sprachinformationen. D.h., der den Kopfhörern 40 übermittelte zweite Datenteil wird gemäß einer vorteilhaften Weiterbildung der Erfindung derart modifiziert, dass die entsprechenden akustischen Informationen zwar unmittelbar dem jeweiligen Zuschauer 101, 102 an die Kopfhörer 40 übermittelt und durch diese wiedergegeben werden, wobei allerdings diese Informationen aufgrund der Filterung derart modifiziert wiedergegeben werden, dass der Eindruck erweckt wird, die Wiedergabe würde nicht lokal über die Kopfhörer 40, sondern stattdessen zentral über die Lautsprecher 30 in den Raum insgesamt erfolgen. Damit nimmt der entsprechende Zuschauer die über den transparenten Kopfhörer 40 abgegebenen Sprachinformationen in gleicher Weise wahr, wie auch die zentral über die raumfüllenden Lautsprecher 30 abgegebenen, keine Sprachinformationen enthaltenen akustischen Informationen. Die Qualität des Hörerlebnisses wird hierdurch deutlich gesteigert, da beide Teile der akustischen Informationen durch den Zuschauer in gleicher Weise und damit ohne Weiteres durch sein Gehör kombiniert als eine Gesamtwahrnehmung wahrgenommen werden können. Für den einzelnen Zuschauer ergibt sich damit nochmals verstärkt der Eindruck, er würde sämtliche akustischen Informationen gemeinsam mit allen anderen Zuschauern hören.

Idealerweise werden die für den bi-nauralen Filter verwendeten Parameterwerte anhand von Messungen experimentell bestimmt. Dies bedeutet, dass bspw. für jeden Raum, in dem eine Wiedergabe entsprechend dem erfindungsgemäßen Verfahren durchgeführt werden soll, einmalig eine entsprechende Messung durchgeführt wird, durch die das Schallverhalten des Raums charakterisiert wird. Die hierbei gewonnenen Informationen können dann allerdings dauerhaft für die Realisierung des erfindungsgemäßen Verfahrens genutzt werden, sofern sich die akustischen Eigenschaften des Raums nicht gravierend ändern. Ferner wäre es denkbar, anhand verschiedener Messungen Parameterwerte zu bestimmen, die verschiedenen Kategorien von Räumen zugeordnet werden können. Dies würde die Möglichkeit eröffnen, Parameterwerte für den bi-nauralen Filter zu nutzen, die nicht zuvor individuell für einen bestimmten Raum ermittelt werden müssen, wodurch der Aufwand insgesamt ein wenig reduziert wird.

Darauf hinzuweisen ist, dass das soeben beschriebene Modifizieren des zweiten Datenteils für alle Hörer in gleicher Weise erfolgen wird, da diese sich ja auch alle im gleichen Raum befinden. Dementsprechend ist idealerweise vorgesehen, den bi-nauralen Filter zentral einzusetzen, sodass die an die Kopfhörer 40 übermittelten Daten bereits entsprechend modifiziert übertragen werden.

Alternativ zu den obigen Erläuterungen wäre es allerdings auch denkbar, die zweiten Audio-Wiedergabemittel, also z.B. den Kopfhörer derart auszugestalten, dass diese die Fähigkeit besitzen, eine solche Messung - selbstständig bzw. nach Aktivierung - automatisiert durchzuführen und das Ergebnis wiederum automatisch in einen entsprechenden Filter für eben diese zweiten Audio-Wiedergabemittel selbst - bzw. im Master-Slave Modus ebenso für gekoppelte, beliebig viele weitere zweite Audio-Wiedergabemittel - umzuwandeln. Diese Vorgehensweise bietet sich insbesondere dann an, wenn eine entsprechende Anpassung des Filters flexibel oder individuell durchgeführt werden muss, was beispielsweise bei der Anwendung im Heimkino-Bereich bzw. zu privaten Zwecken im Wohnzimmer oder dgl. der Fall ist.

In den Kopfhörern 40 selbst kann dann allerdings eine weitere Modifizierung der Daten bzw. der Wiedergabe der akustischen Informationen vorgenommen werden, um die Position und ggf. Kopfhaltung des Benutzers zusätzlich zu berücksichtigen. Hierbei wird berücksichtigt, dass sich die Zuschauer 101, 102 bzw. Hörer an unterschiedlichen Bereichen innerhalb des Raums befinden und dementsprechend unterschiedliche Abstände zu den unterschiedlichen Lautsprechern des zentralen Lautsprechersystems 30 aufweisen.

Bekanntlicherweise breitet sich Schall und damit die durch die Lautsprecher 30 wiedergegebene akustische Information A mit einer Schallgeschwindigkeit von 343 m/s aus, sodass im darstellten Ausführungsbeispiel, in dem die beiden Lautsprecher 30 neben der Leinwand 50 und somit im vorderen Bereich des Raums angeordnet sind, der Benutzer 102 die durch die beiden Lautsprecher 30 abgegebenen akustischen Informationen zu einem geringfügig späteren Zeitpunkt empfangen, also hören wird, als der sich näher an dem Lautsprechersystem 30 befindende Zuschauer 101. Noch allgemeiner ist davon auszugehen, dass die Lautsprecher 30 verteilt in einem Raum angeordnet sein werden, wobei sich dann für jeden Zuschauer in Bezug auf jeden einzelnen Lautsprecher individuelle Laufzeiten für die Übertragung der akustischen Informationen ergeben.

Die Übermittlung des zweiten Datenteils an die Kopfhörer 40 erfolgt allerdings derart auf elektronischem Weg, z.B. via Kabel, Funk, WLAN, Bluetooth..., dass davon ausgegangen werden kann, dass hier eine im Wesentlichen zeitgleiche Übermittlung mit Lichtgeschwindigkeit an alle Zuschauer erfolgt. Wird ferner davon ausgegangen, dass auch die in den Kopfhörern 40 erforderliche Verarbeitung des Signals und die Wiedergabe der zugehörigen Informationen mit identischer Verzögerung erfolgt, bedeutet dies, dass dieser, dem zweiten Datenteil entsprechende Teil der akustischen Informationen prinzipiell durch alle Zuschauer 101, 102 zeitgleich gehört werden würde. Im dargestellten Beispiel würde dies insbesondere in den hinteren Sitzreihen des Kinosaals zu einer merkbaren Zeitverzögerung des Eintreffens der zentral ausgegebenen Nichtsprach-Informationen gegenüber den Sprachinformationen führen.

Auch wenn die Laufzeitunterschiede für die Nichtsprach-Informationen A verhältnismäßig gering sind, können diese also doch zu einem wahrnehmbaren Effekt führen, dahingehend, dass das eigentliche Hören der keine Sprachinformationen enthaltenden akustischen Signale einerseits und der die Sprachinformationen enthaltenden akustischen Signale andererseits nicht exakt zum gleichen Zeitpunkt erfolgt.

Da dies wiederum das Hörerlebnis negativ beeinträchtigen kann, ist vorzugsweise vorgesehen, eine der Position des Zuschauers entsprechende Anpassung des Zeitpunkts der Wiedergabe der zweiten akustischen Informationen vorzunehmen. Dies bedeutet, die Kopfhörer 40 empfangen zunächst im Wesentlichen zeitgleich den zweiten Datenteil, berücksichtigen bei der Wiedergabe der entsprechenden akustischen Informationen allerdings eine bestimmte Zeitverzögerung, um sicherzustellen, dass diese Informationen synchron mit dem Hören der über die zentralen Lautsprecher 30 abgegebenen akustischen Nichtsprach-Informationen gehört werden. Wiederum wird hierdurch das Hörerlebnis für die Zuschauer 101 und 102 deutlich gesteigert.

Zusätzlich zur Distanz zu den Lautsprechern 30 kann ferner auch der absolute Aufprallwinkel der Schallquelle bzw. die Richtung, aus der die über die zentralen Lautsprecher 30 abgegebenen akustischen Nichtsprach-Informationen bei dem Zuschauer eintreffen, berücksichtigt werden.

Der Aufprallwinkel kann psychoakustisch im Kopfhörer simuliert werden unter Ausnutzung der sog. ITD (Interaural Time Difference). Gibt nämlich eine Schallquelle direkt von vorne ein Signal ab, so gibt es keine zeitlichen Unterschiede zwischen dem Eintreffen des Schalls am linken und rechten Ohr. Somit hat der Zuhörer im Kopfhörer das Gefühl, eine Schallquelle ist zentral mittig vor ihm positioniert, wenn die entsprechenden Schallsignale an beiden Ohren gleichzeitig wiedergegeben werden. Ist hingegen die Schallquelle beispielsweise rechts positioniert, so würde der Schall zunächst am rechten Ohr eintreffen und erst - bei einem 16cm Ohr-Abstand - mit etwa 0,65 Millisekunden Verzögerung am linken Ohr. Durch diese ITD kann dem Zuhörer also das Gefühl vermittelt werden, der Schall würde von rechts eintreffen, obwohl beide Pegel identisch sein können.

Da in einem Kinosaal angenommen werden kann, dass jeder Zuschauer direkt nach vorne schaut, ergibt sich absolut zur Mitte der Leinwand immer ein Winkel, der je nach Sitzposition des Zuschauers / Hörers variabel ist. Diese "statische" Situation kann auch psychoakustisch simuliert werden, indem zwischen rechtem und linken Ohr eine (weitere) Zeitverzögerung der Signalwidergabe eingeführt wird. Hierfür wird zwischen der Widergabe des Signals an beiden Ohren eine Zeitverzögerung zwischen 0ms und 0,65ms abhängig von einem Winkel im Bereich von 0-90 Grad eingeführt. Ist also die Sitzposition des Zuschauers und ferner die Position des zentralen Lautsprechers bekannt, kann über trigonometrische Beziehungen der absolute Winkel des Zuschauers zum zentralen Lautsprecher und damit die Höhe der erforderlichen Zeitverzögerung errechnet werden.

Für jeden Zuschauer sollte also idealerweise dessen Position und Kopfhaltung bekannt sein, um die oben erläuterte Optimierung der Wiedergabe der Sprachinformationen durchführen zu können. Die Ermittlung dieser Informationen kann beispielsweise wie nachfolgend beschrieben erfolgen.

Zunächst werden die Distanz und der Blick- und somit "Hör"-Winkel für jeden Sitz ist in einem sog. Lookup-Table hinterlegt. Es muss dann festgestellt werden, welchen Sitz der Zuschauer tatsächlich belegt, wobei dies beispielsweise über die nachfolgend genannten Verfahren realisiert werden kann:
I) Indoor GPS: Mittels 4 synchronisierter Sendemodule und je einem Empfangsmodul, welches z.B. in den Kopfhörer integriert ist, kann über die 4 Laufzeitdifferenzen entsprechender Signale (z.B. von hierfür genutzten Ultraschallsignalen) und das Lösen einer nicht linearen Gleichung vierter Ordnung die Position im Raum über nichtlineare Optimierung errechnet und als Grundlage für die Verzögerung der Signalwiedergabe genutzt werden.
II) RFID TAG: Jeder Sitz ist mit einem RFID-Tag ausgestattet und jeder Kopfhörer mit einem RFID-Lesegerät. Sobald sich der Zuschauer in seinem Sitz befindet erkennt der Kopfhörer, in welchem Sitz sich der Zuschauer befindet. Die Sitzposition zu jedem RFID-Tag ist wiederum in einem Lookup-Table abgelegt, so dass in einfacher Weise die Position des Zuschauers ermittelt werden kann.
III) In einer einfachen Form kann ferner die Übermittlung der zweiten Audiodaten auch drahtgebunden erfolgen, wobei dann die Kopfhörer jeweils mit einem entsprechenden Anschluss bspw. an dem zugehörigen Platz in dem Kinosaal verbunden werden. Da in diesem Fall die Position des Kopfhörer-Anschlusses bekannt ist, kann hierdurch unmittelbar die Position des Kopfhörers festgestellt werden, sodass dieser entweder selbstständig eine geeignete Zeitverzögerung berechnen kann oder ihm diese entsprechend mitgeteilt wird.
IV) Schließlich könnte auch vorgesehen sein, dass der Kopfhörer oder eine dem Kopfhörer zugeordnete Bedieneinheit Mittel zur Eingabe der Position bzw. des Platzes aufweist und anhand dieser Position dann eine entsprechende Laufzeitverzögerung berechnet und/oder mitgeteilt wird.

Sobald die Position eines Zuschauers bekannt ist, können dann die Distanz und der absolute Winkel zum zentralen Lautsprecher berechnet und dementsprechend zwei individuelle "statische" Delays für das rechte und linke Ohr eingestellt werden. Zunächst ergibt sich also aufgrund des Abstands eine generelle Laufzeitverzögerung, wobei diese dann noch für beide Ohren individuell abhängig vom Winkel modifiziert wird.

Hierbei ist daraufhinzuweisen, dass sich die soeben erläuterte Korrektur auf einen einzelnen Lautsprecher des für die Wiedergabe der ersten Audiodaten vorgesehenen Lautsprechersystems bezieht. Besteht das System aus mehreren Lautsprechern und sind diese verteilt angeordnet, so kann idealerweise individuell für jeden einzelnen Lautsprecher der Abstand des Zuschauers sowie der Aufprallwinkel des zugehörigen Schalls berücksichtigt werden. Dies würde dazu führen, dass die entsprechenden zweiten Audiodaten dann jeweils dem einzelnen Lautsprecher entsprechende Laufzeitmodifikationen erhalten, die für die beiden Ohren zusätzlich noch winkelabhängig modifiziert werden.

Da allerdings eine derartige Vorgehensweise eine Multikanalübertragung mit mehr als zwei Kanälen erfordern würde und somit mit einem beträchtlichen Aufwand verbunden ist, kann ggf. auch auf eine technisch weniger aufwändige Lösung zurückgegriffen werden. Hierbei werden die sog. bi-naural-Impulsantworten für jeden Lautsprecher aufgenommen und es erfolgt ein Falten des Signals aller Lautsprecher des zentralen Lautsprechersystems mit diesen Signalen, was dann insgesamt in einem bi-naural-Mittelwert oder Mix resultiert, der übertragen wird. In diesem Fall werden wiederum die beiden Signale für das rechte und linke Ohr verzögert, allerding nur in Relation zu einem zentral platzierten "Haupt"- bzw. Center-Lautsprecher des Systems, was zur Folge hat, das eigentlich nur in Bezug auf diesen Centerlautsprecher ein exakt synchronisiertes Zumischen der Sprachinformationen erfolgt. In Bezug auf die weiteren Lautsprecher würden sich bei dieser beispielhaft beschriebenen Ausführungsweise geringfügig Abweichungen bzw. Fehler ergeben, die jedoch für den erfindungsgemäß gewünschten Gesamteffekt vernachlässigbar sind.

Darüberhinausgehend wäre ferner denkbar, zu berücksichtigen, dass sich der relative Betrachtungswinkel des Zuschauers mit seinen Kopfbewegungen weiter ändern kann. Dieser Winkel kann z.B. mit Hilfe eines Gyro-Sensors ermittelt werden, welcher im Kopfhörer verbaut ist. Dieser Sensor bedarf jedoch zunächst einer Kalibrierung, die wie folgt durchgeführt werden könnte. In dem Moment, in dem der Zuschauer seinen Platz einnimmt, sich zurücklehnt und der RFID-Tag gelesen wird, kann davon ausgegangen werden, dass der Zuschauer nach vorne schaut und somit der relative Betrachtungswinkel gleich null ist, jedoch der absolute Winkel der Berechnung von Sitzposition zur Leinwandmitte, also dem in dem Lookup-Table hinterlegten Wert entspricht. Ist auf diese Weise der Gyro-Sensor kalibriert, erkennt er nachfolgend jede Abweichung von dem im Lookup-Table hinterlegten Winkel. Zusätzlich zur Verzögerung für die Distanz und den absoluten Betrachtungswinkel verzögert dann das Kopfhörersystem das Signal für die Signalwiedergabe am rechten bzw. linken Ohr abhängig von der Kopfrotation relativ und dynamisch in Echtzeit. Somit kann für jegliche Kopfbewegung eine Anpassung der ITD vorgenommen werden, mit dem Ergebnis, dass die sprachliche Information - obwohl nicht durch die im Raum fixierten ersten Audio-Wiedergabemittel / Lautsprecher, sondern durch die "beweglichen" zweiten Audio-Wiedergabemittel / Kopfhörer (o.ä.) wiedergegeben - für den Benutzer jederzeit "räumlich fixiert" bleibt.

Letztendlich führen also die erfindungsgemäße Vorgehensweise sowie die zusätzlichen Optimierungen hinsichtlich der Anpassung der Signalwiedergabe an den Kopfhörern zu einem äußerst hochwertigen Hörerlebnis für die Zuschauer, wobei diese trotz allem akustische Signale in einer von ihnen gewünschten - insbesondere hinsichtlich der Sprache - modifizierten Weise hören können.

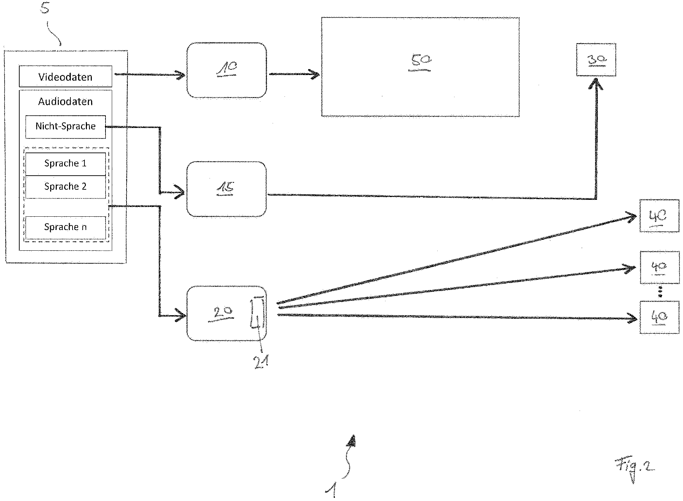

Figur 2 zeigt schematisch die Ausgestaltung eines entsprechenden Systems 1, mit dessen Hilfe das zuvor erläuterte Verfahren durchgeführt werden kann.

Hierbei ist zunächst eine zentrale Speichereinheit 5 z.B. in Form eines Servers erforderlich, welche die Video- und Audiodaten des Films bereitstellt. Die Audiodaten sind dabei wie schematisch dargestellt in einen ersten, keine synchronisierbaren bzw. synchronisierten Sprachinformationen enthaltenden Anteil und einen zweiten, synchronisierbare bzw. synchronisierte Sprachinformationen enthaltenden Anteil aufgeteilt, wobei der zweite Teil mehrfach vorhanden sein kann, insbesondere in n verschiedenen Varianten, wobei n der Anzahl der zur Verfügung stehenden unterschiedlich-synchronisierten Sprachversionen des Films entspricht.

Die Videodaten werden hierbei dann zunächst einer Einheit 10 zur Verfügung gestellt, welche die Wiedergabe z.B. auf der Leinwand, dem Bildschirm oder per Virtual Reality 50 des Systems 1 veranlasst. Bei der Einheit 10 kann es sich um einen entsprechenden Projektor oder einen Treiber für ein entsprechendes Display handeln, wie dies von üblichen Systemen zur Film- bzw. Videodarstellung bekannt ist.

Der erste Teil der Audiodaten, also derjenige Teil, der keine Sprachinformationen enthält, soll wiederum zentral für alle Zuschauer gemeinsam wiedergegeben werden und wird dementsprechend über eine Einheit 15 an ein Lautsprechersystem 30 übermittelt. Auch hierbei handelt es sich um die bereits bekannten Komponenten, die für eine Filmwiedergabe genutzt werden, sodass hier keine Veränderungen des Systems im Vergleich zu einer klassischen Film- oder Videovorführung erforderlich sind. Wesentlich ist hier lediglich, dass ausschließlich der erste Datenanteil, also der Nichtsprach-Anteil - an die Einheit 15 gegeben und durch diese weitergeleitet wird, nicht jedoch - wie bislang - die vollständigen Audiodaten.

Der zweite, die Sprache enthaltende Anteil, wird nämlich einer Verteilereinheit 20 zur Verfügung gestellt, welche letztendlich für die Übermittlung der entsprechenden zweiten Daten an die den Zuschauern individuell zugeordneten Lautsprecher bzw. Kopfhörer 40 verantwortlich ist. Die Übermittlung der Daten von der Verteilereinheit 20 an die Kopfhörer 40 kann dabei sowohl drahtgebunden als auch drahtlos erfolgen. Wesentlich ist, dass jeder Lautsprecher bzw. Kopfhörer 40 in der Lage sein muss, zumindest die der gewünschten Sprache entsprechende Fassung der zweiten Daten zu erhalten. Dies kann beispielsweise dadurch erfolgen, dass eine individuelle Kommunikation zwischen der Einheit 20 und dem entsprechenden Kopfhörer 40 aufgebaut wird und somit ausschließlich die Daten in der der gewünschten Sprache entsprechenden Fassung an die jeweiligen Kopfhörer 40 übermittelt werden. Alternativ hierzu könnten auch alle verschiedenen Sprachversionen gleichzeitig durch die Einheit 20 und damit an alle Kopfhörer 40 übermittelt werden, wobei dann die Kopfhörer 40 zwar sämtliche Daten empfangen, allerdings nur die der gewünschten Sprachversion entsprechenden Anteile der Daten nutzen und diese letztendlich wiedergeben.

Der der Schallausbreitung in dem Raum entsprechende bi-naurale Filter findet wie bereits erwähnt vorzugsweise auf sämtliche zweite Datenteile in gleicher Weise Anwendung. Dementsprechend ist vorzugsweise vorgesehen, dass dieser Filter 21 in der Verteilereinheit 20 implementiert wird, sodass die von dieser Einheit 20 ausgegebenen Daten bereits in geeigneter Weise modifiziert wurden. Die in der zentralen Speichereinheit 5 gespeicherten Audiodaten liegen in diesem Fall zunächst in einer von dem Raum der Wiedergabe unabhängigen Form vor. Denkbar wäre allerdings auch, dass die Daten bereits durch die Speichereinheit 5 mit Hilfe eines bi-nauralen Filters modifiziert werden, bevor sie an die Einheit 20 weitergeleitet werden, oder dass die Daten bereits in einer durch den bi-nauralen Filter modifizierten Fassung in der Speichereinheit 5 gespeichert sind. Schließlich wäre es auch denkbar, dass sich in jedem Kopfhörer 40 bzw. jedem zweiten Audio-Wiedergabemittel ein eigener Filter befindet, der die Wiedergabe eben dieses Kopfhörers 40 bzw. zweiten Audio-Wiedergabemittels modifiziert.

Die Kopfhörer 40 selbst sollten zumindest die oben erwähnte zweite Modifikation bei der Wiedergabe der Sprachinformationen durch Anwenden eines entsprechenden Zeitverzögerungs-Filters durchführen. Hierfür ist erforderlich, dass die Kopfhörer 40 ihre Position innerhalb des Raums erkennen bzw. wissen, welche Zeitverzögerung anzuwenden ist, wobei zur Positionsermittlung insbesondere die oben genannten unterschiedlichen Vorgehensweisen I) bis IV) denkbar wären.

Um sicherzustellen, dass alle Zuschauer unabhängig von der von Ihnen gewählten Sprache die akustischen Informationen synchron wahrnehmen, ist vorgesehen, dass die den verschiedenen Sprachen entsprechenden Audio-Versionen synchron gestartet werden und sich hierbei an dem Master, z.B. an den ersten Audiodaten ohne Sprache ("Nicht-Sprache") orientieren. Mit einer Rückkoppelung, welche die Timestamps (aktuelle Position) der jeweiligen Sprachversionsfiles (Sprache 1, Sprache 2, Sprache n ..) kommuniziert, kann während des Abspielens identifiziert werden ob die Wiedergaben auseinanderlaufen bzw. asynchron werden. Hierbei existiert ein Schwellenwert, ab dem ein Zuhörer das Auseinanderlaufen bemerken würde. Bevor dieser erreicht wird, wird das System eingreifen und die Abspielposition der Sprachinformationen entsprechend korrigieren, ohne dass der Zuhörer eine Beeinträchtigung merkt. Sollte der Drift der Spuren hingegen einen zu hohen Schwellenwert einnehmen, korrigiert ein härterer Mechanismus (Jump) die betroffene Spur. Dies wäre zwar für den Zuhörer kurzfristig wahrnehmbar, allerdings im Extremfall als Korrektur im Rahmen eines Back-Up-Mechanismus notwendig.

Zu den Kopfhörern 40 ist anzumerken, dass diese - wie oben erwähnt - derart ausgestaltet sein müssen, dass sie neben einer Wiedergabe der den zweiten Audiodaten entsprechenden Signale gleichzeitig auch das Hören der den ersten Audiodaten entsprechenden Schallsignale ermöglichen müssen. Dies bedeutet, dass die Kopfhörer 40 externe Schallsignale nicht abblocken bzw. unterdrücken dürfen, sondern für derartige Signale durchlässig sein müssen. In diesem Sinne kann auch von "transparenten Kopfhörer" gesprochen werden. Erreicht werden kann dies beispielsweise dadurch, dass die entsprechenden Lautsprecher des Kopfhörers 40 nicht schallreduzierend um die Ohren eines Benutzers herum abschließen, sondern derart ausgebildet sind, dass externe Schallwellen ebenfalls ungehindert und unverändert in den Gehörgang des Hörers eintreten können. Beispielsweise wäre eine Anordnung der Lautsprecher in einem Abstand von bis zu 1m denkbar, wobei dann die Lautsprecher beispielsweise in eine Kopfstütze integriert oder vergleichbar verbaut sein können. Es muss sich also bei den zweiten Wiedergabemitteln nicht zwingend um Kopfhörer handeln.

Abschließend sollen zwei beispielhafte Varianten zur Auswahl und Übermittlung des zweiten Datenteils an einen Kopfhörer 40 eines Zuschauers erläutert werden. Figur 3 zeigt hierzu ein entsprechendes System, welches aus dem Kopfhörer 40 selbst sowie einem mit diesem verbundenen, dem Benutzer zugeordneten Kommunikationsgerät 45 besteht. Zum Beispiel kann es sich bei diesem Kommunikationsgerät 45 um ein Mobiltelefon des Nutzers handeln, welches drahtlos oder drahtgebunden mit der in Figur 2 gezeigten Verteilereinheit 20 kommuniziert und andererseits drahtlos - z.B. über Bluetooth - oder drahtgebunden mit dem Kopfhörer 40 verbunden ist.

Im dargestellten Fall ist bspw. auf dem Mobilfunkgerät 45 eine Anwendungssoftware installiert, welche dem Benutzer eine Teilnahme an dem erfindungsgemäßen Übertragungsverfahren ermöglicht, wobei mit Hilfe der Anwendungssoftware zunächst ein drahtloser oder drahtgebundener Kommunikationsaufbau mit der Verteilereinheit 20 - beispielsweise im Rahmen eines WLAN-Netzwerks oder mittels Bluetooth - erfolgt und dann bspw. anhand einer graphischen Benutzeroberfläche 46 der Benutzer einerseits die von ihm gewünschte Sprache sowie andererseits bspw. seinen Platz in dem Kinosaal eingeben kann. Eine manuelle Eingabe des Sitzplatzes ist selbstverständlich nicht erforderlich, wenn - wie in den obigen Beispielen erläutert - das System selbst in der Lages ist, die Position des Benutzers zu erkennen. Während der Filmwiedergabe wird dann drahtlos oder drahtgebunden die Übermittlung der zweiten Daten vorgenommen, die dann an den Kopfhörern 40 wiedergegeben werden. Bevorzugt erfolgt hierbei die Datenübermittlung unmittelbar von der Verteilereinheit 20 an die Kopfhörer 40, so dass das Mobilfunkgerät 45 in diesem Fall in erster Linie als Fernbedienung genutzt wird. Alternativ wäre es auch denkbar, unter Zwischenschaltung des Mobilfunkgeräts 45 die Datenübermittlung vorzunehmen. Das Mobilfunkgerät 45 leitet in diesem -weniger bevorzugten - Fall die von der Verteilereinheit 20 erhaltenen Daten an die Kopfhörer 40 weiter. Gleichzeitig kann die Positionsinformation auch dazu genutzt werden, die Dauer der Zeitverzögerung für die Wiedergabe der zweiten Audiodaten entsprechend anzupassen.

Bevorzugt zu der zunächst dargestellten Variante wäre auch denkbar, dass die Kopfhörer 40 selbst entsprechende Mittel zum Aufbau einer Kommunikationsverbindung mit der Verteilereinheit sowie zum Auswählen einer von dem Zuschauer gewünschten Sprache aufweisen. Diese Ausführungsform ist in Figur 4 dargestellt, welche eine beispielhafte seitliche Ansicht eines entsprechenden Kopfhörers 40 zeigt. An dessen Seite befindet sich in diesem Fall eine Anzeige 48, welche den ausgewählten Sprachkanal anzeigt, wobei dieser mit Hilfe einfacher Bedientasten 49 oder einem digitalen oder sensorischen Bedienfeld gewechselt werden kann. Der Kopfhörer 40 ist hierbei über entsprechende Kommunikationsmittel (z.B. Funk, Bluetooth, wLAN oder drahtgebunden) mit der zentralen Verteilereinheit 20 gekoppelt.

Letztendlich wird somit ein äußerst komfortables, benutzerfreundliches und verlässliches System zur Wiedergabe von Audioinformationen geschaffen, welches eine sehr hohe Flexibilität hinsichtlich der Möglichkeiten zur Anpassung der wiedergegebenen Informationen aufweist, andererseits ein qualitativ extrem hochwertiges Hörerlebnis gewährleistet.

Dabei soll abschließend nochmals darauf hingewiesen werden, dass das Verfahren nicht auf den Anwendungsfall der gleichzeitigen Wiedergabe von Audio- und Bild-/Videoinformationen beschränkt ist. Tatsächlich wäre es denkbar, das erfindungsgemäße Konzept auch bei der Wiedergabe ausschließlich von Audiodaten zu nutzen. Ferner könnte das Verfahren auch von lediglich einem einzigen Benutzer in einem beliebigen Raum oder im Freien genutzt werden.

## Patentansprüche

1. Verfahren zur Übermittlung und Wiedergabe akustischer Informationen, vorzugsweise in einer Multimedia-Anwendung, welches folgende Schritte aufweist:
a) Bereitstellen von in digitaler Form vorliegenden akustischen Daten, welche einen ersten Datenteil und einen zweiten Datenteil umfassen, wobei der erste Datenteil keine Sprachinformationen enthält und der zweite Datenteil Sprachinformationen enthält;
b) Übermitteln des ersten Datenteils an erste Audio-Wiedergabemittel (30) und Ausgabe akustischer Signale, die dem ersten Datenteil entsprechen, durch die ersten Audio-Wiedergabemittel (30);
c) Übermitteln des zweiten Datenteils an zweite Audio-Wiedergabemittel (40) und Ausgabe akustischer Signale, die dem zweiten Datenteil entsprechen durch die zweiten Audio-Wiedergabemittel (40);
wobei die zweiten Audio-Wiedergabemittel (40) in Bezug auf einen ihnen zugewiesenen Benutzer (101, 102) anders positioniert sind als die ersten Audio-Wiedergabemittel (30), insbesondere in unmittelbarer Nähe des Benutzers (101, 102), und derart ausgebildet sind, dass
• der Benutzer (101, 102) die von den ersten Audio-Wiedergabemitteln (30) abgegebenen akustischen Signale hören kann und
• die von den zweiten Audio-Wiedergabemitteln (40) abgegebenen akustischen Signale im Wesentlichen ausschließlich durch den Benutzer (101, 102) gehört werden können.

2. Verfahren nach Anspruch 1,
**dadurch gekennzeichnet,**
**dass** mehrere Benutzer (101, 102) vorhanden sind, denen jeweils individuell zweite Audio-Wiedergabemittel (40) zugeordnet sind, wobei
die von den ersten Audio-Wiedergabemitteln (30) abgegebenen akustischen Signale durch alle Benutzer (101, 102) gemeinsam gehört werden können und
die von den zweiten Audio-Wiedergabemittel (40) abgegebenen akustischen Signale im Wesentlichen ausschließlich durch den jeweiligen Benutzer (101, 102) dieses zweiten Audio-Wiedergabemittels (40) gehört werden können.

3. Verfahren nach Anspruch 1 oder 2,
**dadurch gekennzeichnet,**
**dass** der den zweiten Audio-Wiedergabemitteln (40) übermittelte zweite Datenteil individuell von dem Benutzer (101, 102) gewählt wird, insbesondere derart, dass die in dem zweiten Datenteil enthaltenen Sprachinformationen in einer durch den Benutzer (101, 102) gewählten Sprache vorliegen.

4. Verfahren nach einem der vorherigen Ansprüche,
**dadurch gekennzeichnet,**
**dass** der zweite Datenteil modifiziert wird, um den Raum bzw. den Ort der Wiedergabe der akustischen Informationen zu berücksichtigen, wobei für den Fall, dass mehrere Benutzer (101, 102) vorhanden sind, der zweite Datenteil vorzugsweise für alle Benutzer (101, 102) in gleicher Weise modifiziert wird.

5. Verfahren nach Anspruch 4,
**dadurch gekennzeichnet,**
**dass** das Modifizieren des zweiten Datenteils durch Verwendung eines bi-nauralen Filters erfolgt, wobei Parameter des Filters vorzugsweise anhand zuvor durchgeführter Testmessungen ermittelt werden.

6. Verfahren nach Anspruch 4 oder 5,
**dadurch gekennzeichnet,**
**dass** das Modifizieren des zweiten Datenteils vor der Übermittlung des zweiten Datenteils zentral erfolgt.

7. Verfahren nach einem der vorherigen Ansprüche,
**dadurch gekennzeichnet,**
**dass** der zweite Datenteil vor der Wiedergabe der akustischen Signale durch die zweiten Audio-Wiedergabemittel (40) individuell modifiziert wird, um die Position der zweiten Audio-Wiedergabemittel (40) in Relation zu den ersten Audio-Wiedergabemitteln (30) sowie die Ausrichtung der zweiten Audio-Wiedergabemittel (40) zu berücksichtigen.

8. Verfahren nach Anspruch 7,
**dadurch gekennzeichnet,**
**dass** das Modifizieren durch die zweiten Audio-Wiedergabemittel (40) erfolgt, wobei das Modifizieren insbesondere das Berücksichtigen einer zeitlichen Verzögerung der Wiedergabe betrifft.

9. Verfahren nach einem der vorherigen Ansprüche,
**dadurch gekennzeichnet,**
**dass** zeitgleich mit der Übermittlung und Wiedergabe der akustischen Informationen optische Informationen, insbesondere Videoinformationen wiedergegeben werden.

10. Verfahren nach einem der vorherigen Ansprüche,
**dadurch gekennzeichnet,**
**dass** das Übermitteln des zweiten Datenteils drahtlos, optional mit Hilfe eines mit den zweiten Audio-Wiedergabemitteln (40) gekoppelten Mobilfunkgeräts erfolgt.

11. System zur Übermittlung und Wiedergabe akustischer Informationen, vorzugsweise in einer Multimedia-Anwendung, welches aufweist:
a) eine Speichereinrichtung (5) zum Bereitstellen von in digitaler Form vorliegenden akustischen Daten, welche einen ersten Datenteil und einen zweiten Datenteil umfassen, wobei der erste Datenteil keine Sprachinformationen enthält und der zweite Datenteil Sprachinformationen enthält;
b) Mittel zur Übermittlung (15) des ersten Datenteils an erste Audio-Wiedergabemittel (30);
c) erste Audio-Wiedergabemittel (30) zur Ausgabe akustischer Signale, die dem ersten Datenteil entsprechen;
d) Mittel zur Übermittlung (20) des zweiten Datenteils an zweite Audio-Wiedergabemittel (40);
e) zweite Audio-Wiedergabemittel (40) zur Ausgabe akustischer Signale, die dem zweiten Datenteil entsprechen;
wobei die zweiten Audio-Wiedergabemittel (40) in Bezug auf einen ihnen zugewiesenen Benutzer (101, 102) anders positioniert sind als die ersten Audio-Wiedergabemittel (30), insbesondere in unmittelbarer Nähe des Benutzers (101, 102), und derart ausgebildet sind, dass
• der Benutzer (101, 102) die von den ersten Audio-Wiedergabemitteln (30) abgegebenen akustischen Signale hören kann und
• die von den zweiten Audio-Wiedergabemitteln (40) abgegebenen akustischen Signale im Wesentlichen ausschließlich durch den Benutzer (101, 102) gehört werden können.

12. System nach Anspruch 11,
**dadurch gekennzeichnet,**
**dass** es sich bei den ersten Audio-Wiedergabemitteln (30) um eine Anordnung aus einem oder mehreren Lautsprechern handelt und
**dass** es sich bei den zweiten Audio-Wiedergabemitteln (40) um einen Kopfhörer handelt.

13. System nach Anspruch 11 oder 12,
**dadurch gekennzeichnet,**
**dass** dieses mehrere zweite Audio-Wiedergabemittel (40) aufweist.

14. System nach einem der Ansprüche 11 bis 13,
**dadurch gekennzeichnet,**
**dass** der den zweiten Audio-Wiedergabemitteln (40) übermittelte zweite Datenteil individuell von dem Benutzer (101, 102) gewählt wird, insbesondere derart, dass die in dem zweiten Datenteil enthaltenen Sprachinformationen in einer durch den Benutzer (101, 102) gewählten Sprache vorliegen.

15. System nach einem der Ansprüche 11 bis 14,
**dadurch gekennzeichnet,**
**dass** dieses zusätzliche Mittel (10, 50) zur synchronen Wiedergabe von Videodaten aufweist.
